**Europäisches Patentamt**

**European Patent Office**

**Office européen des brevets**

(19)

(11) Numéro de publication: **0 045 263**
A1

## (12) DEMANDE DE BREVET EUROPEEN

(21) Numéro de dépôt: **81401212.6**

(51) Int. Cl.³: **F 16 F 9/49**, F 16 F 9/06

(22) Date de dépôt: **28.07.81**

(30) Priorité: **28.07.80 FR 8016553**

(43) Date de publication de la demande: **03.02.82**
**Bulletin 82/5**

(84) Etats contractants désignés: **AT BE CH DE GB IT LI LU NL SE**

(71) Demandeur: **Adelet, Pierre Henri, Villa Danilys Chemin Luis Mariano Arcangues, F-64200 Biarritz (FR)**
Demandeur: **Dreyer, Yves, 5 Allée de la Soule Domaine d'Antxague, F-64600 Anglet (FR)**

(72) Inventeur: **Adelet, Pierre Henri, Villa Danilys Chemin Luis Mariano Arcangues, F-64200 Biarritz (FR)**
Inventeur: **Dreyer, Yves, 5 Allée de la Soule Domaine d'Antxague, F-64600 Anglet (FR)**

(74) Mandataire: **Letheule, Jacqueline, 5 Rue José-Maria de Hérédia, F-75007 Paris (FR)**

(54) **Dispositif amortisseur de mouvement entre deux pièces coulissantes.**

(57) L'amortisseur est constitué par un élément cylindrique 1 du genre renfermant un liquide tel que de l'huile et un gaz dont la compression varie suivant les mouvements d'un piston 6 solidaire d'une tige coulissante 4, tandis qu'un piston libre 15 forme cloison étanche entre le liquide et le gaz inclus.

La tige 4 et le piston 6 qui en est solidaire incluent des moyens de freinage de passage du liquide de l'une à l'autre des faces du piston 6 et les faces en regard des pistons 6 et 15 sont prévues pour une interpénétration de la pièce 22 dans la cavité 24 en fin de course de compression, afin que le liquide agisse pour interdire tout talonnage.

L'appareil comprend aussi des moyens 17 de charge du gaz et de réglage de pression.

Applicaions: notamment aux véhicules automobiles.

1

## DISPOSITIF AMORTISSEUR DE MOUVEMENT ENTRE DEUX PIECES COULISSANTES.

La présente invention concerne les amortisseurs hydropneumatiques à un seul tube du type dit "télescopique".

Les dispositifs de ce genre sont utilisés dans de nombreuses applications lorsqu'il est nécessaire, aussi bien de réduire l'amplitude du mouvement relatif entre deux pièces dont l'une au moins est mobile, que de supprimer les effets de choc en retour résultant d'un mouvement relatif plus ou moins brutal. Parmi ces applications, il convient particulièrement de citer l'adaptation à la suspension des véhicules de tous genres.

Le dispositif objet de la présente invention appartient à la catégorie des amortisseurs hydropneumatiques dans lesquels sont inclus un liquide tel que de l'huile, et un gaz neutre tel que l'azote, dont la compression varie suivant le mouvement des pièces mobiles de cet amortisseur.

En plus d'une étanchéité parfaite, il présente, du fait de sa conception, plusieurs avantages d'ordre divers tels que possibilité d'obtenir extrêmement facilement le réglage aussi bien de la dureté que de l'amplitude du mouvement, sans modification de la course, notamment en agissant sur la pression initiale du gaz inclus, facilité de compensation des modifications résultant par exemple de l'usure, par la possibilité de recharge en gaz. En outre, ce qui est particulièrement appréciable, il interdit tout talonnage en fin de course de compression.

On décrira ci-après un mode de réalisation de ce dispositif en se référant au dessin annexé donné à titre d'exemple non limitatif.

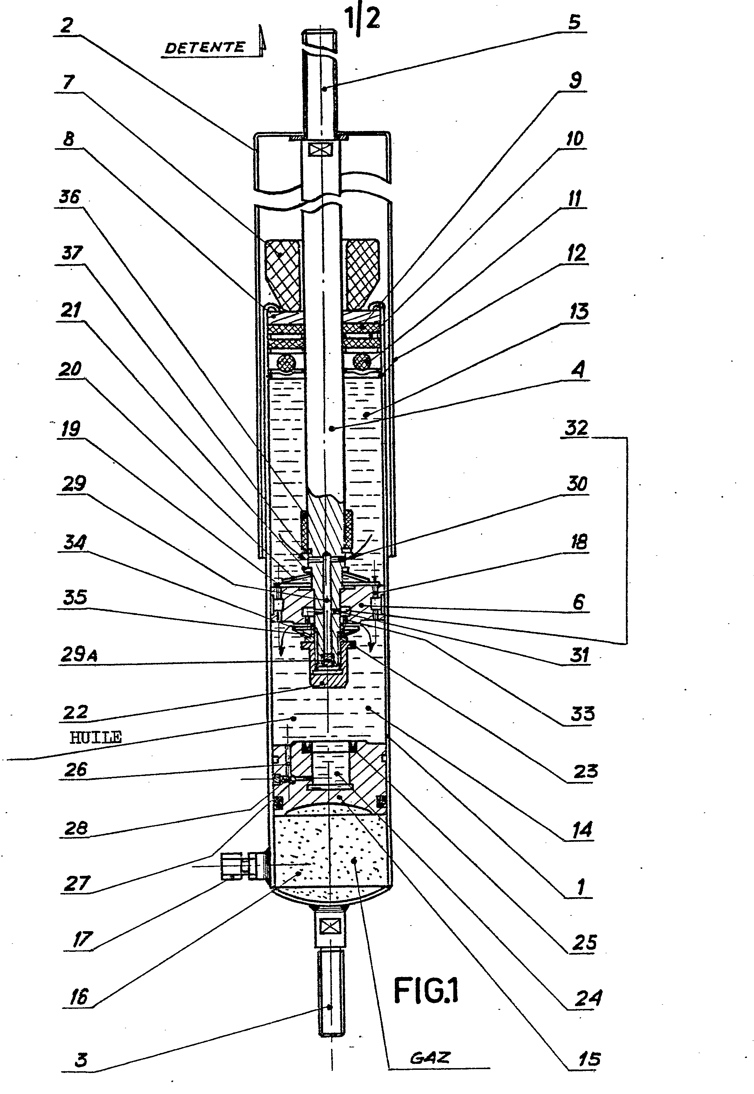

La figure 1 représente en coupe l'ensemble amortisseur conforme à l'invention.

La figure 2 est une vue partielle agrandie de l'amortisseur en position dite "de compression",représentant en détail les moyens de freinage particuliers de l'invention.

Les références désignant les mêmes pièces sont identiques sur les deux figures.

Le corps de l'appareil est constitué à la manière connue par un cylindre métallique 1 tel qu'en acier, pourvu d'un cache poussière 2. Le corps du cylindre 1 est relié à l'un des points de fixation 3,tandis que la tige 4 sortant du cylindre est reliée à l'autre point de fixation 5. Les moyens de fixation sont dans cet exemple constitués à la manière connue par des tiges. Il est bien évident qu'ils peuvent l'être par oeils ou par oeil et tige selon les cas d'utilisation et le genre de montage adopté.
Un piston 6 est rendu solidaire de la tige 4.

L'amortisseur inclut des moyens d'étanchéité et de butée constitués par un moyen amortisseur de talonnage 7, un moyen obturateur 8, des rondelles d'étanchéité et d'appui respectivement 9 et 10, une butée intérieure de talonnage 11 et un jonc d'arrêt 12.

On sait que dans les amortisseurs appartenant à cette catégorie le liquide est refoulé dans des enceintes de volume variable délimitées notamment par le piston solidaire de la tige coulissante et un piston libre.

Suivant l'invention, le liquide est réparti dans deux enceintes, respectivement 13 et 14, de part et d'autre du piston 6. L'une des faces du piston libre désigné par la référence 15 constitue comme indiqué l'une des parois mobiles de l'enceinte 14 tandis que son autre face constitue paroi mobile de l'enceinte 16 dans laquelle le gaz est inclus. Ce gaz est introduit à l'aide du moyen obturateur de charge et décharge 17.

On rappelera succintement le fonctionnement général d'un tel amortisseur avant de décrire les moyens particuliers de l'invention concernant le passage de liquide de l'une à l'autre des faces du piston 6, suivant le sens du mouvement.

Lorsque sous l'effet d'une cause extérieure la tige 4 tend à s'enfoncer dans le cylindre 1,ce qui constitue le mouvement de compression, il en résulte, par l'intermédiaire du piston 15, un effet de compression du gaz inclus dans l'enceinte 16, mais d'autre part un certain effet de freinage de ce mouvement est produit par le passage du liquide de l'enceinte 14 à l'enceinte 13 par des canalisations d'étranglement.

Suivant l'invention, l'amortisseur comprenant seulement deux enceintes emplies de liquide, le passage de ce dernier s'effectue à travers le piston 6 dans des conditions qui seront précisées plus loin.

Lors du mouvement dit de "détente", duquel résulte la décompression au moins relative du gaz inclus, le liquide passe de l'enceinte 13 à l'enceinte 14 avec également un effet de freinage. Cet effet est obtenu par la disposition particulière des moyens de passage avec étranglement inclus dans la tige 4 et le piston 6.

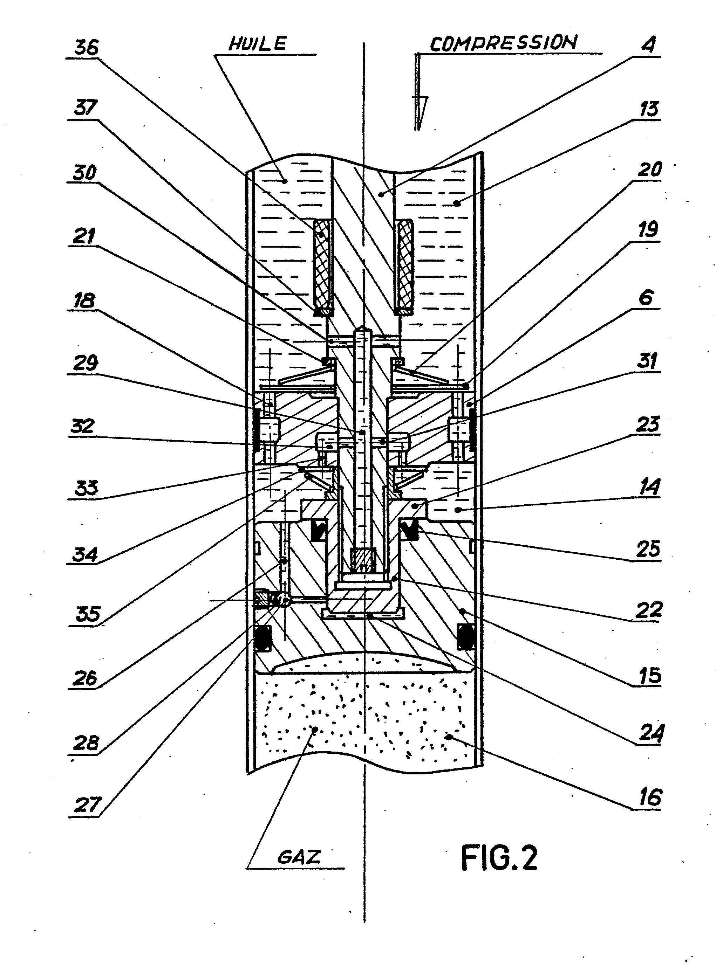

En se référant plus particulièrement à la figure 2 qui représente une vue agrandie, on décrira tout d'abord de quelle manière le liquide passe de l'enceinte 14 à l'enceinte 13 lors du mouvement de compression.

A cet effet, dans le piston 6 sont pratiqués des conduits 18 de faible section (dont deux sont visibles sur la figure), en liaison libre avec l'enceinte 14, mais ne pouvant être en liaison avec l'enceinte 13 que par le soulèvement de la rondelle 19 formant clapet, maintenue en position d'obturation par la pièce 20 formant ressort, en appui sur la bague 21.

En outre, suivant une disposition caractéristique de l'invention, des moyens sont prévus pour interdire tout choc de talonnage en fin de compression. Ils comprennent outre l'élément 7 déjà mentionné l'ensemble constitué par les éléments 22-23, 25 et 15 qui va être décrit.

Pour obtenir ce résultat, l'ensemble piston 6-tige 4 est prolongé en direction du piston libre 15 par un moyen obturateur -freineur constitué par la pièce 22 pourvue d'un bord formant butée 23. Concurremment, dans le piston 15 est ménagé un logement 24 prévu pour recevoir l'ensemble 22-23 en fin de course de compression. L'orifice du logement 24 est pourvu d'un joint à lèvre 25.

Dans le piston 15 est pratiqué un forage en L 26 prévu pour faire communiquer le logement 24 avec la face supérieure de ce piston. Une bille 27 est sollicitée par un ressort 28 obturant ainsi la canalisation 26. Dans ces conditions, lorsqu'en fin de course de compression la pièce 22 pénètre dans le logement 24, le liquide qui y est inclus est chassé dans la canalisation 26 dont la faible section détermine un mouvement de freinage qui est complèté par l'action du ressort taré 28 agissant sur la bille 27, laquelle tend, comme il a été indiqué, à obturer la canalisation 26.

On comprend que ce passage de liquide fortement freiné interdit à l'ensemble 22-23 de talonner violemment contre le piston 15 qui se stabilisera lui-même sous l'effet du gaz comprimé inclus dans l'enceinte 16.

Lors du mouvement dit de "détente", le passage de liquide de l'enceinte 13 à l'enceinte 14 s'effectue de la manière suivante : dans la tige coulissante 4 est forée à cet effet une canalisation 29. Cette canalisation, obturée par le bouchon 29A débouche d'une part radialement en 30 dans l'enceinte 13, d'autre part en 31 dans une gorge 32 pratiquée dans le piston 6. Cette gorge est elle-même en liaison avec les orifices 33 débouchant sur la face du piston 6 délimitant l'enceinte 14, ces orifices étant normalement obturés par une rondelle 34 formant clapet maintenu en position par le ressort 35. On comprend ainsi que, d'une part la canalisation de faible section 29 et ses orifices 30 et 31, d'autre part l'action de la pièce 35 formant ressort agissant sur le clapet 34 déterminent le freinage requis, du passage de liquide de l'enceinte 13 à l'enceinte 14, lors du mouvement de détente.

Une bague 36 disposée autour de la tige 4 et maintenue par une rondelle 37 est prévue pour amortir tout choc de talonnage en fin de course dans le sens du mouvement de détente qui vient d'être décrit.

Bien entendu, le dispositif inclut les chambres anti-émulsion et les joints racleurs classiques qui n'ont pas été référencés sur les figures.

Comme il a été indiqué ci-dessus, il est possible grâce à une disposition avantageuse de l'invention ,de durcir à volonté le fonctionnement de l'amortisseur et d'adapter ce dernier aux différentes conditions de fonctionnement telles que, dans le cas d'application aux véhicules automobiles, surcharge de poids, conduite sur routes défectueuses ou sinueuses, compétition...

A cet effet, le moyen obturateur 17 est prévu pour être raccordé directement à la partie correspondante d'une bouteille contenant le gaz sous pression, ce qui permet de pouvoir assurer à volonté introduction, évacuation et réglage de pression du gaz dans l'enceinte 16.

Il est entendu que sans sortir du cadre de l'invention toutes variantes pourront être apportées au dispositif décrit au moyen du dessin annexé donné à titre d'exemple, notamment en ce qui concerne le nombre, les dimensions et la forme des éléments constitutifs, et en particulier la section et le nombre des conduits calibrés de passage du liquide pourront être différents suivant les résultats désirés et l'application envisagée.

REVENDICATIONS

1. Dispositif amortisseur de mouvement entre deux pièces coulissantes fixées respectivement à deux points dont la distance varie sous l'effet de causes extérieures, du genre comprenant un tube solidaire de l'un de ces points, une tige pourvue d'un piston coulissant dans ce tube et solidaire de l'autre point, le dit tube étant empli d'une part d'un gaz dont la compression varie sous l'effet des mouvements effectués par le dit piston, d'autre part d'un liquide tel que de l'huile provoquant un effet de freinage différent suivant que le mouvement détermine une augmentation ou une diminution de compression du gaz au moyen de passages d'étranglement et d'obturateurs tarés; un piston libre formant cloison étanche entre l'enceinte emplie de gaz et celle emplie de liquide, CARACTERISE en ce qu'il comprend en combinaison et disposés suivant un même axe: une première enceinte (13) contenant du liquide et dans laquelle se meut la tige (4); un piston principal unique (6) solidaire de la tige précitée et incluant pour le passage du liquide d'une face à l'autre des moyens constituant frein de passage ainsi que des moyens obturateurs n'autorisant qu'une circulation unidirectionnelle de liquide respectivement dans un sens et dans l'autre, les dits moyens étant respectivement constitués uniquement par des forages calibrés et des clapets tarés par élément élastique formant ressort, à l'exclusion de toute pièce supplémentaire coulissante ou ressort; une deuxième enceinte (14) contenant du liquide; un piston libre (15) dans lequel est pratiquée une cavité (24) dans la face en regard du dit piston principal et prévue pour qu'une partie en saillie correspondante (22) de l'ensemble tige et piston principal (4-6) puisse y pénétrer en fin de course d'approche des deux dits pistons, le dit piston libre (15) incluant des moyens de freinage de passage de liquide (26-27-28) mettant en communication le fond de la dite cavité avec la face en regard du dit piston principal, et formant, par son autre face, cloison étanche d'une troisième enceinte (16) incluant celle-là un fluide compressible, de telle sorte que les effets amortisseurs requis soient obtenus en toute efficacité à l'aide de pièces aussi simples que possible, en nombre aussi faible que possible.

2. Dispositif amortisseur selon la revendication 1, caractérisé en ce que la communication entre le fond de la cavité (24) pratiquée dans une face du piston libre (15) et cette face est établie par au moins une canalisation (26) normalement obturée par un moyen tel qu'une bille (27) sollicitée par un ressort (28), de telle sorte que la restriction imposée à la circulation du liquide dans la dite canalisation interdise tout choc de talonnage.

3. Dispositif amortisseur selon la revendication 1, caractérisé en ce que l'ensemble constitué par la tige coulissante (4) et le piston (6) qui en est solidaire inclut une canalisation axiale (29) débouchant, d'une part radialement (en 30) dans l'enceinte (13) emplie de liquide délimitée par la face du dit piston opposée à celle en regard du piston libre (15), d'autre part (en 31) sur la face en regard du piston libre, sous un moyen formant clapet (34-35), déterminant ainsi l'effet de freinage requis dans le sens dit de "détente", tandis que des canalisations de liaison

3

0045263

(18) entre les deux faces du dit piston (6) solidaire de la tige coulissante (4) débouchent librement sur la face en regard du dit piston libre,mais sur la face opposée, sous un moyen formant clapet (19-20), déterminant ainsi l'effet de freinage requis dans le sens dit de "compression".

4.    Dispositif amortisseur selon la revendication 3, caractérisé en ce qu'il est pratiqué dans le piston (6) solidaire de la tige coulissante (4) au moins une canalisation (33), d'une part parallèle à l'axe du dit piston et débouchant sous le clapet (34-35)disposé sur la face en regard du piston libre,d'autre part constituée par une gorge (32) pratiquée dans le dit piston solidaire de la dite tige et en regard de perforations radiales (31) pratiquées dans la dite tige.

5.    Dispositif amortisseur selon la revendication 1, caractérisé en ce qu'une bague en matériau compressible (36) est disposée sur la tige coulissante (4) près du piston (6) qui en est solidaire, de manière qu'en fin de course dite "de détente",le contact de la dite bague avec les rondelles (9) et butées d'amortissement (10) disposées à l'extrémité correspondante du dit tube (1) empêche tout choc de talonnage.

6.    Dispositif amortisseur selon la revendication 1, caractérisé en ce que la partie du tube cylindrique constituant l'enceinte (16) dans laquelle le gaz est introduit est pourvue d'un moyen de remplissage et d'évacuation (17) prévu pour être raccordé à une partie correspondante de bouteille contenant le gas à introduire,indépendante de l'amortisseur, de manière à pouvoir assurer remplissage, évacuation et réglage de pression du gaz à volonté et selon son utilisation.

FIG.1

FIG.2

0045263

2/2

HUILE   COMPRESSION

GAZ

| Catégorie | DOCUMENTS CONSIDERES COMME PERTINENTS | | CLASSEMENT DE LA DEMANDE (Int. Cl.³) |
|---|---|---|---|
| | Citation du document avec indication, en cas de besoin, des parties pertinentes | Revendica-tion concernée | |
| | FR - A - 1 369 229 (STABILUS) <br><br> * en entier * <br><br> --- | 1,2 | F 16 F 9/49 <br> F 16 F 9/06 |
| | US - A - 2 853 974 (HEWITT) <br><br> * colonne 2, ligne 24 à colonne 3, ligne 26; figures 1-4 * <br><br> --- | 1,2 | |
| | GB - A - 1 022 489 (Cie. PARISIENNE D'OUTILLAGE A AIR COMPRIME) <br><br> * en entier * <br><br> --- | 1,2 | **DOMAINES TECHNIQUES RECHERCHES (Int. Cl.³)** <br><br> F 16 F <br> B 60 G |
| | FR - A - 1 354 130 (LEY) <br><br> * en entier * <br><br> --- | 1,2,6 | |
| | DE - A - 2 855 561 (FICHTEL & SACHS) <br><br> * en entier * <br><br> --- | 1,2,6 | |
| | FR - A - 1 364 982 (KAYABA INDUSTRY) <br><br> * page 2; figures 3,4 * <br><br> --- | 3,4 | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence |
| | GB - A - 767 977 (DE KONING) <br><br> * figures 2-5 * <br><br> --- | 3,4 | D: document cité dans la demande <br> L: document cité pour d'autres raisons |
| | | ./. | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 16-09-1981 | ESPEEL |

OEB Form 1503.1   06.78

| Catégorie | Citation du document avec indication, en cas de besoin, des parties pertinentes | Revendication concernée |
|---|---|---|
| | **DOCUMENTS CONSIDERES COMME PERTINENTS** | |
| | GB - A - 1 016 729 (DAIMLER BENZ) <br><br> * page 1, lignes 55-59; figure * <br><br> --- | 5 |
| A | FR - A - 1 402 818 (CHATROUX) | 1 |
| A | US - A - 3 216 535 (SCHULTRE) | 1 |
| A | GB - A - 691 477 (ARMSTRONG) | 1 |
| A | GB - A - 949 426 (FORD) | 1 |

CLASSEMENT DE LA DEMANDE (Int. Cl. 3)

DOMAINES TECHNIQUES RECHERCHES (Int. Cl. 3)

OEB Form 1503.2   06.78